# EUROPÄISCHE PATENTSCHRIFT

(11) **EP 0 910 949 B1**
(45) Veröffentlichungstag und Bekanntmachung des Hinweises auf die Patenterteilung: **24.10.2001**
(21) Anmeldenummer: 98123303.4
(22) Anmeldetag: 05.12.1995
(51) Int. Cl.: A01N 43/42, A01N 43/54

(54) **Fungizide Mischung**
Fungicidal mixture
Mélange fongicide

(30) Priorität: 16.12.1994 DE 4444911
(43) Veröffentlichungstag der Anmeldung: 28.04.1999
(62) Teilanmeldung aus: 95941071.3
(73) Patentinhaber: BASF AKTIENGESELLSCHAFT, 67056 Ludwigshafen (DE)
(72) Erfinder: Wagner, Oliver Dr., 66450 Bexbach (DE); Eicken, Karl Dr., 67157 Wachenheim (DE); Bayer, Herbert Dr., 68159 Mannheim (DE); Sauter, Hubert Dr., 68167 Mannheim (DE); Ammermann, Eberhard Dr., 64646 Heppenheim (DE); Lorenz, Gisela Dr., 67434 Hambach (DE)

(56) Entgegenhaltungen:
- EP-A- 0 326 330

## Beschreibung

Die vorliegende Erfindung betrifft eine fungizide Mischung, welche
a) eine Verbindung der Formel I 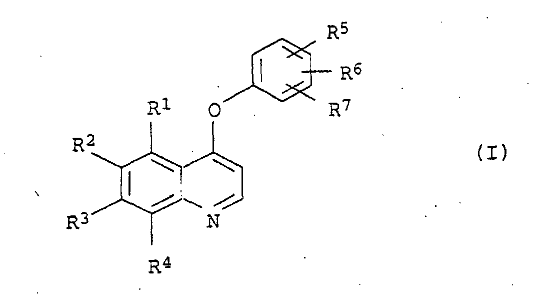 ihr N-Oxid oder eines ihrer Salze, in der die Reste die folgende Bedeutung haben:
   - R¹,R²,R³,R⁴: unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio C₁-C₄-Halogenalkylthio;
   - R⁵, R⁶, R⁷: unabhängig voneinander: Wasserstoff; Hydroxy, Cyano, Nitro, Halogen, C₁-C₇-Alkyl, C₁-C₇-Halogen-alkyl, C₁-C₇-Alkoxy, C₁-C₇-Halogenalkoxyl C₁-C₇-Alkylthio, C₁-C₇-Halogenalkylthio, C₁-C₇-Hydroxyalkyl, C₂-C₄-Acyl, Aryl, Aryloxy, wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) ein Pyrimidinderivat der Formel II 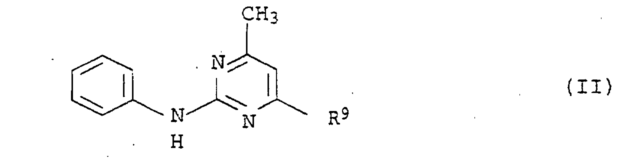 oder eines seiner Salze, in der der Rest R⁹ für Methyl, Propin-1-yl oder Cyclopropyl steht,
in einer synergistisch wirksamen Menge enthält.

Außerdem betrifft die Erfindung Verfahren zur Bekämpfung von Schadpilzen mit den Verbindungen I und einer Verbindung II oder sie enthaltenden synergistischen Mischungen und die Verwendung der Verbindungen I bzw. der Verbindungen II zur Herstellung derartiger Mischungen.

Verbindungen der Formel I, deren fungizide Wirkung sowie deren Herstellung, sind bekannt aus US-A 5 240 940 sowie aus ACS Sympos. Ser. 443, Seite 538 bis Seite 552 (1991).

Ebenfalls bekannt sind die Pyrimidinderivate II, deren Herstellung und deren Wirkung gegen Schadpilze [R⁹ = Methyl : DD-A 151 404 (common name: Pyrimethanil); R⁹ = 1-Propinyl: EP-A 224 339 (common name: Mepanipyrim); R⁹ = Cyclopropyl: EP-A 310 550 (common name: Cyprodinil)].

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an aufgebrachten Wirkstoffen eine verbesserte Wirkung gegen Schadpilze aufweisen (synergistische Mischungen).

Demgemäß wurden die eingangs definierten Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Verbindungen I oder II allein.

Die Verbindungen I bzw. II sind wegen des basischen Charakters des Ring-Stickstoffatoms bzw. der NH-Gruppierung in der Lage, mit anorganischen oder organischen Säuren oder mit Metallionen Salze zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise in Betracht: Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl, welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl, welche eine oder zwei Phosphorsäurereste tragen), wobei die Alkyl- bzw. Arylreste weitere Substituenten tragen können, z.B. p-Toluolsulfonsäure, Salicylsäure, p-Aminosalicylsäure, 2-Phenoxybenzoesäure, 2-Acetoxybenzoesäure etc.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink in Betracht. Besonders bevorzugt sind die Metallionen der Elemente der Nebengruppen der vierten Periode. Die Metalle können dabei in den verschiedenen ihnen zukommenden Wertigkeiten vorliegen.

Ferner lassen sich die Verbindungen I in an sich bekannter Weise in die N-Oxide überführen (vgl. US-A 5 240 940).

Bevorzugt werden für die Bereitstellung der erfindungsgemäßen fungiziden Mischungen Verbindungen I, ihre Salze oder N-Oxide verwendet, in denen die Reste die folgende Bedeutung haben:
- R¹, R², R³, R⁴: unabhängig voneinander Wasserstoff, Halogen, C₁-C₂-Alkyl, C₁-C₂-Halogenalkyl, C₁-C₂-Alkoxy, C₁-C₂-Halogenalkoxy der C₁-C₂-Alkylthio;
- R⁵, R⁶, R⁷: unabhängig voneinander Wasserstoff, Nitro, Cyano, Halogen, C₁-C₄-Alkyl, C₁-C₄-Halogenalkyl, C₁-C₄-Alkoxy oder Phenyl.

Im Hinblick auf die Anwendbarkeit als Mischungspartner sind insbesondere die Verbindungen Ia gemäß der folgenden Tabelle 1 bevorzugt.

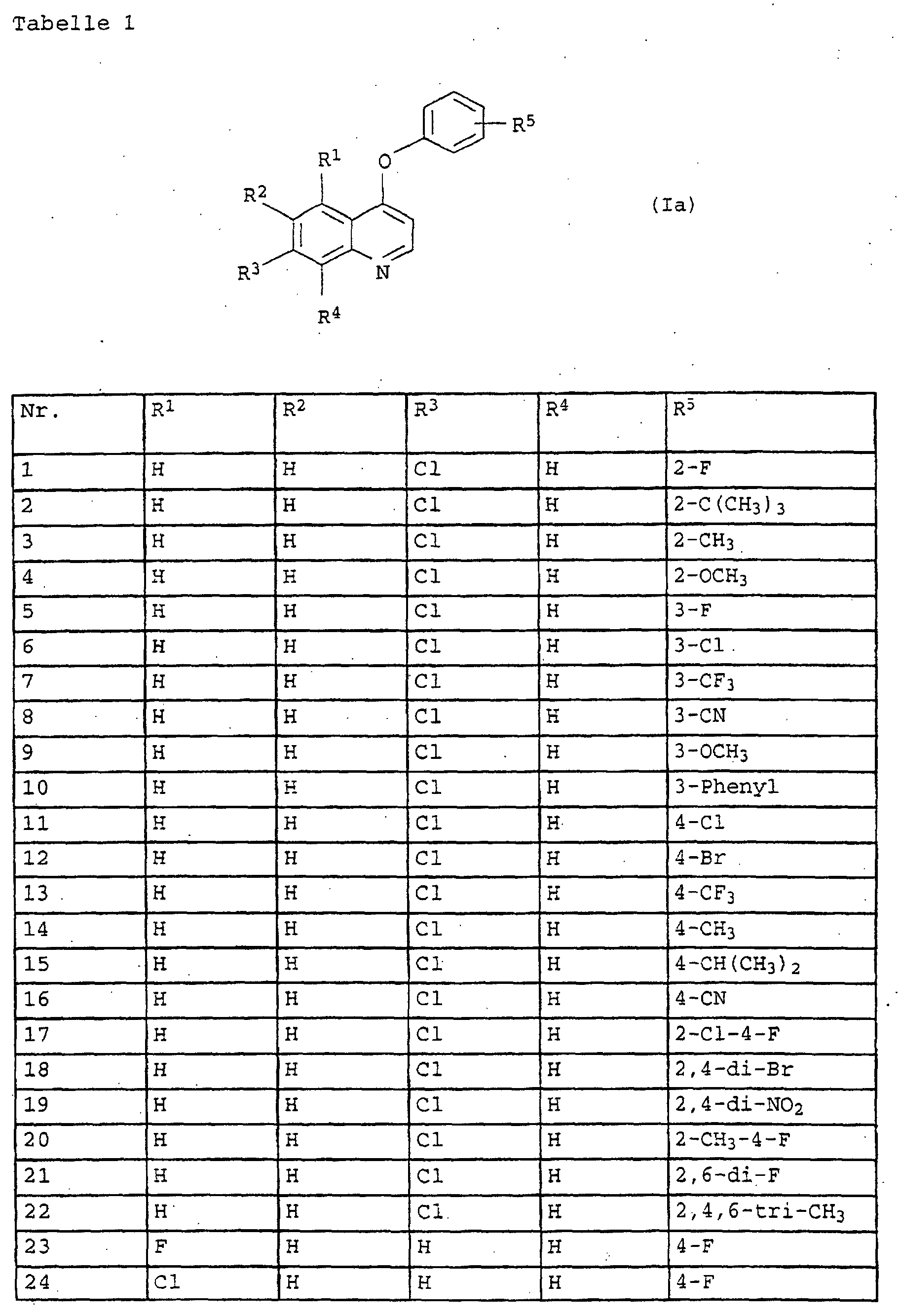

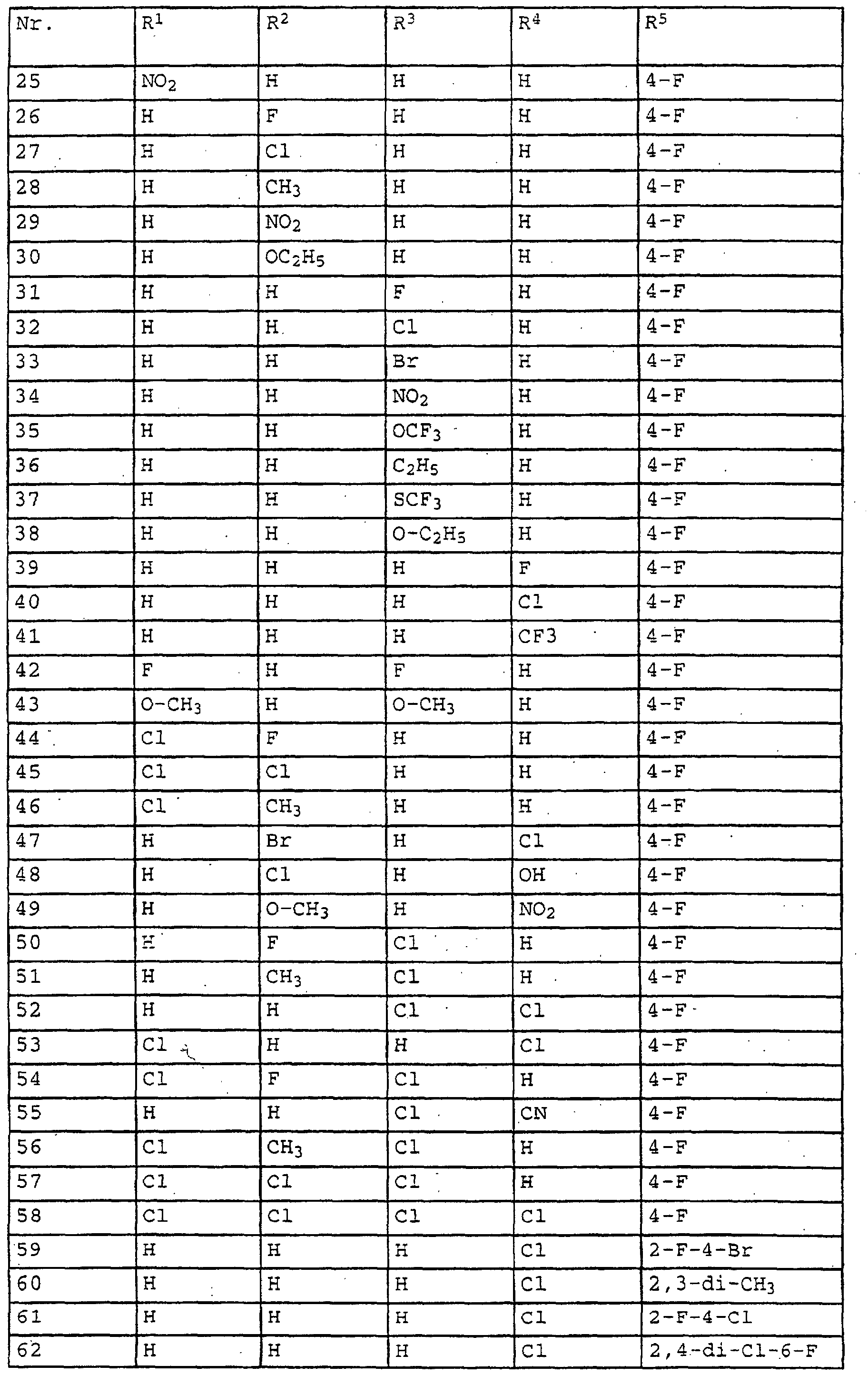

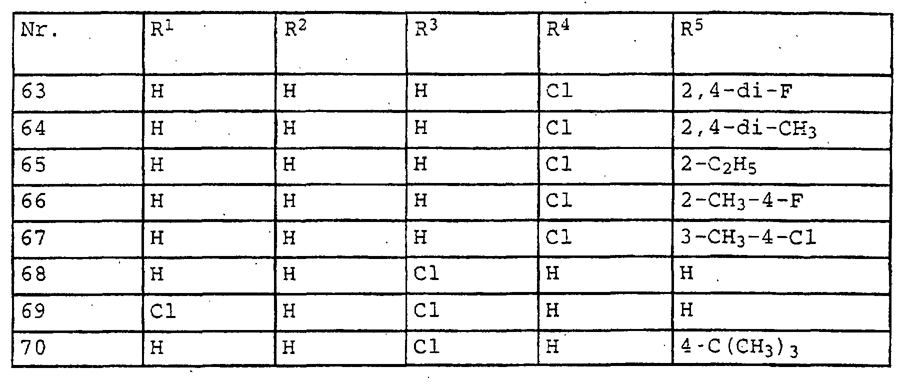

Ganz besonders bevorzugt sind die Verbindungen Ia gemäß Tabelle 2 sowie das Hydrochlorid und das N-Oxid der darin genannten Verbindung 8.

**Tabelle 2**

| Nr. | R¹ | R² | R³ | R⁴ | R⁵ |
|---|---|---|---|---|---|
| 1 | H | H | Cl | H | 2-Cl |
| 2 | H | H | Cl | H | 2-Br |
| 3 | H | H | Cl | H | 2-CN |
| 4 | H | H | Cl | H | 2-CF₃ |
| 5 | H | H | Cl | H | 2-NO₂ |
| 6 | H | H | Cl | H | 4-F |
| 7 | H | H | Cl | H | 2,4-di-F |
| 8 | Cl | H | Cl | H | 4-F |
| 9 | H | H | H | Cl | 2-Cl-4-F |
| 10 | CH₃ | H | CH₃ | H | 4-F |

Die in oder bei den Tabellen 1 und 2 genannten Verbindungen der Formel Ia sind bekannt aus US-A 5 240 940 und/oder ACS Sympos. Ser. 443, Seite 538 bis Seite 552 (1991).

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die Verbindungen I und II, gleichzeitig, und zwar gemeinsam oder getrennt oder nacheinander ausgebracht, zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander ausgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,1:1, vorzugsweise 5:1 bis 0,2:1, insbesondere 3:1 bis 0,3:1 angewendet.

Die Aufwandmengen der erfindungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha. Die Aufwandmengen liegen dabei für die Verbindungen I bei 0,01 bis 0,5 kg/ha, vorzugsweise 0,05 bis 0,5 kg/ha, insbesondere 0,05 bis 0,2 kg/ha. Die Aufwandmengen für die Verbindungen II liegen entsprechend bei 0,1 bis 1,0 kg/ha, vorzugsweise 0,4 bis 1,0 kg/ha, insbesondere 0,4 bis 0,8 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I und II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nuß- schalenmehl, Cellulosepulver oder andere feste Trägerstoffe.

Die Formulierungen enthalten im allgemeinen 0,1 bis 95 Gew.-%, vorzugsweise 0,5 bis 90 Gew.-% der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

### Anwendungsbeispiel: Wirkung gegen Weizenmehltau (kurativ)

Blätter von in Töpfen gewachsenen Weizenkeimlingen der Sorte "Frühgold" wurden mit Sporen des Weizenmehltaus (Erysiphe graminis f. sp. tritici) inokuliert und 24 Stunden später mit wäßrigen Wirkstoffaufbereitungen, die 80 Gew.-% Wirkstoff und 20 Gew.-% Emulgiermittel in der Trockensubstanz enthielten, bis zur Tropfnässe besprüht. Nach dem Antrocknen der wäßrigen Wirkstoffaufbereitungen wurden die Versuchspflanzen anschließend im Gewächshaus bei Temperaturen zwischen 20 und 22 °C und 75 bis 80 % relativer Luftfeuchtigkeit aufgestellt. Nach 7 Tagen wurde das Ausmaß der Mehltauentwicklung ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967)) und mit den beobachteten Wirkungsgraden verglichen.

Die Versuche wurden mit den folgenden 3 Verbindungen durchgeführt, denen aus Gründen der Übersicht die Bezeichnungen (A), (B) und (C) zugeordnet wurden:

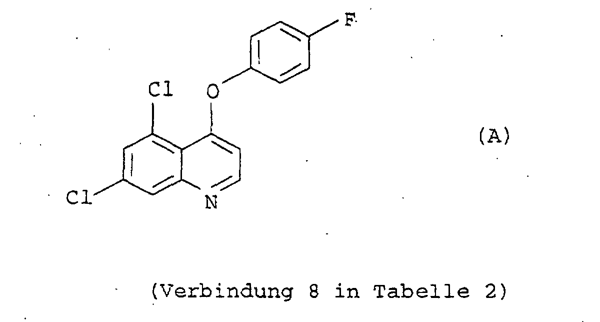

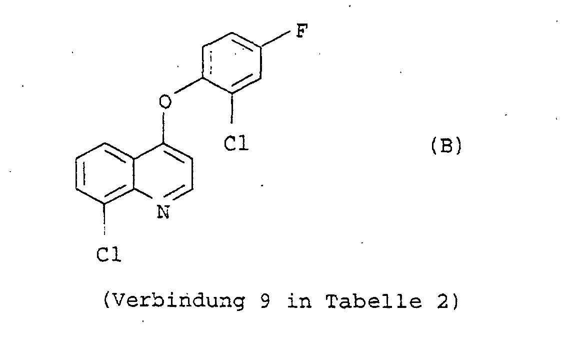

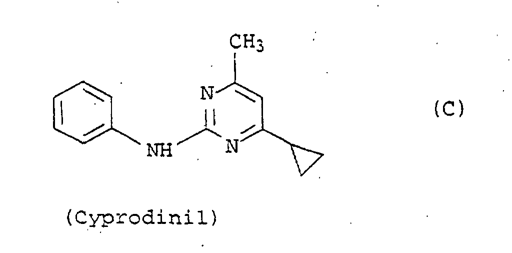

### A) Unbehandelte Kontrolle: 99% Befall

**Tabelle A.1**

| Wirkungsgrad der einzelnen Wirkstoffe | | |
|---|---|---|
| Wirkstoff | Wirkstoffkonzentration in der Spritzbrühe [ppm] | Wirkungsgrad [% der unbehandelten Kontrolle] |
| (A) | 4 | 0 |
| (B) | 4 | 0 |
| (C) | 16 | 39 |

**Tabelle A.2**

| Wirkungsgrad der Mischung | | |
|---|---|---|
| Wirkstoffmischung | beobachteter Wirkungsgrad | erwarteter Wirkungsgrad |
| 16 ppm (A) + 4 ppm (C); Mischungsverhältnis 4:1 | 90 | 39 |
| 16 ppm (B) + 4 ppm (C); Mischungsverhältnis 4:1 | 95 | 39 |

Versuchsergebnis: Der beobachtete Wirkungsgrad ist in allen Mischungsverhältnissen höher, als nach der Colby-Formel vorausberechnet.

## Patentansprüche

1. Fungizide Mischung, enthaltend
a) eine Verbindung der Formel I 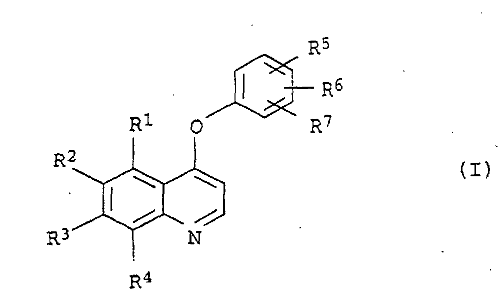 ihr N-Oxid oder eines ihrer Salze, in der die Reste die folgende Bedeutung haben:
R¹,R²,R³,R⁴ unabhängig voneinander: Wasserstoff, Hydroxy, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio;
R⁵,R⁶,R⁷ unabhängig voneinander: Wasserstoff, Hydroxy, Cyano, Nitro, Halogen, C₁-C₇-Alkyl, C₁-C₇-Halogenalkyl, C₁-C₇-Alkoxy, C₁-C₇-Halogenalkoxy, C₁-C₇-Alkylthio, C₁-C₇-Halogenalkylthio, C₁-C₇-Hydroxyalkyl, C₂-C₄-Acyl, Aryl, Aryloxy, wobei die Reste mit Aryl ihrerseits eine bis drei der folgenden Gruppen tragen können: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, und
b) ein Pyrimidinderivat der Formel II 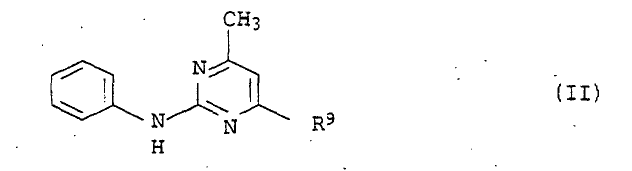 oder eines seiner Salze, in der der Rest R⁹ für Methyl, Propin-1-yl oder Cyclopropyl steht,
in einer synergistisch wirksamen Menge.

2. Fungizide Mischung nach Anspruch 1, **dadurch gekennzeichnet, daß** das Gewichtsverhältnis der Verbindung I zu der Verbindung II 10:1 bis 0,1:1 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I und einer Verbindung II gemäß Anspruch 1 behandelt.

4. Verfahren nach Anspruch 3, **dadurch gekennzeichnet, daß** man die Verbindung I und die Verbindungen II gleichzeitig, und zwar gemeinsam oder getrennt, oder nacheinander ausbringt.

5. Verwendung einer der Verbindungen I gemäß Anspruch 1 zur Herstellung von fungizid wirksamen synergistischen Mischungen gemäß Anspruch 1.

6. Verwendung einer der Verbindungen II gemäß Anspruch 1 zur Herstellung von fungizid wirksamen synergistischen Mischungen gemäß Anspruch 1.

## Claims

1. A fungicidal mixture comprising
a) a compound of the formula I 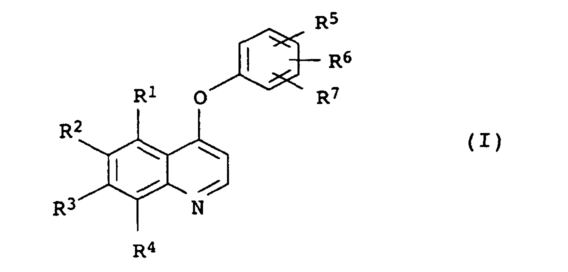 an N-oxide or a salt thereof, where the radicals are defined as follows:
R¹,R²,R³ and R⁴ independently of one another are: hydrogen, hydroxyl, nitro, halogen, C₁-C₄-alkyl, C₁-C₄-haloalkyl, C₁-C₄-alkoxy, C₁-C₄-haloalkoxy, C₁-C₄-alkylthio, C₁-C₄-haloalkylthio;
R⁵,R⁶,R⁷ independently of one another are: hydrogen, hydroxyl, cyano, nitro, halogen, C₁-C₇-alkyl, C₁-C₇-haloalkyl, C₁-C₇-alkoxyl C₁-C₇-haloalkoxy, C₁-C₇-alkylthio, C₁-C₇-haloalkylthio, C₁-C₇-hydroxyalkyl, C₂-C₄-acyl, aryl or aryloxy, it being possible for the radicals with aryl to have attached to them, in turn, one to three of the following groups: cyano, nitro, halogen, C₁-C₄-alkyl, C₁-C₄-haloalkyl, C₁-C₄-alkoxy, C₁-C₄-haloalkoxy, C₁-C₄-alkylthio and C₁-C₄-haloalkylthio, and
b) a pyrimidine derivative of the formula II 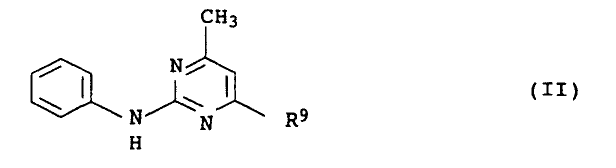 or a salt thereof where the radical R⁹ is methyl, propyn-1-yl or cyclopropyl,
in a synergistically active amount.

2. A fungicidal mixture as claimed in claim 1, wherein the ratio by weight of the compound I to the compound II is 10:1 to 0.1:1.

3. A method of controlling fungal pests, which comprises treating the fungal pests, their environment or the plants, seeds, soils, surfaces, materials or rooms which are to be protected against them with a compound of the formula I and a compound II as claimed in claim 1.

4. A method as claimed in claim 3, wherein compound I and compounds II are applied simultaneously, i.e. jointly or separately, or in succession.

5. The use of one of the compounds I as claimed in claim 1 for the preparation of fungicidally active synergistic mixtures as claimed in claim 1.

6. The use of one of the compounds II as claimed in claim 1 for the preparation of fungicidally active synergistic mixtures as claimed in claim 1.

## Revendications

1. Mélange fongicide contenant
a) un composé de formule I 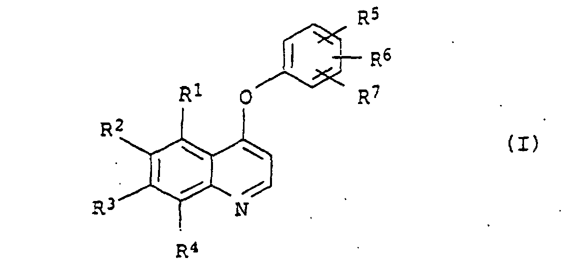 son N-oxyde ou l'un de ses sels, pour lesquels les symboles ont les significations suivantes :
R¹, R², R³, R⁴, indépendamment les uns des autres : l'hydrogène, un groupe hydroxy, nitro, un halogène, un groupe alkyle en C1-C4, halogénoalkyle en C1-C4, alcoxy en C1-C4, halogénoalcoxy en C1-C4, alkylthio en C1-C4, halogénoalkylthio en C1-C4 ;
R⁵, R⁶, R⁷, indépendamment les uns des autres : l'hydrogène, un groupe hydroxy, cyano, nitro, un halogène, un groupe alkyle en C1-C7, halogénoalkyle en C1-C7, alcoxy en C1-C7, halogénoalcoxy en C1-C7, alkylthio en C1-C7, halogénoalkylthio en C1-C7, hydroxyalkyle en C1-C7, acyle en C2-C4, aryle, aryloxy, les groupes à partie aryle pouvant eux-mêmes porter un à trois des substituants suivants : cyano, nitro, halogéno, alkyle en C1-C4, halogénoalkyle en C1-C4, alcoxy en C1-C4, halogénoalcoxy en C1-C4, alkylthio en C1-C4 et halogénoalkylthio en C1-C4, et
b) un dérivé de la pyrimidine répondant à la formule II 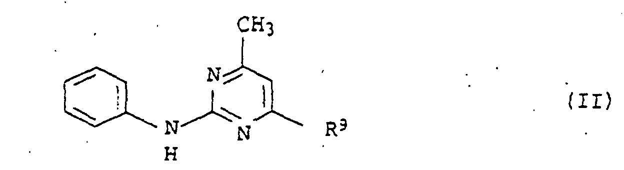 ou l'un de ses sels, le symbole R⁹ représentant un groupe méthyle, propyn-1-yle ou cyclopropyle,
en quantité synergétique efficace.

2. Mélange fongicide selon la revendication 1, **caractérisé par le fait que** les proportions relatives en poids entre le composé I et le composé II vont de 10 : 1 à 0,1 : 1.

3. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles par un composé de formule I et un composé de formule II selon la revendication 1.

4. Procédé selon la revendication 3, **caractérisé par le fait que** l'on applique le composé I et les composés II en même temps, ensemble ou séparément, ou successivement.

5. Utilisation de l'un des composés I selon la revendication 1 pour la préparation de mélanges fongicides à activité synergétique selon la revendication 1.

6. Utilisation de l'un des composés II selon la revendication 1 pour la préparation de mélanges fongicides à activité synergétique selon la revendication 1.
